(19) Europäisches Patentamt / European Patent Office / Office européen des brevets

(11) **EP 3 702 663 B1**

(12) **EUROPEAN PATENT SPECIFICATION**

(45) Date of publication and mention
of the grant of the patent:
**29.11.2023 Bulletin 2023/48**

(21) Application number: **19159783.0**

(22) Date of filing: **27.02.2019**

(51) International Patent Classification (IPC):
**H05B 45/10** *(2020.01)*    **H05B 47/105** *(2020.01)*
**B60Q 1/08** *(2006.01)*

(52) Cooperative Patent Classification (CPC):
**B60Q 1/085; H05B 45/10; H05B 47/105;**
B60Q 2300/054; B60Q 2300/112

(54) **METHOD FOR CORRECTING A LIGHT PATTERN AND AUTOMOTIVE LIGHTING DEVICE**

VERFAHREN ZUR KORREKTUR EINES LICHTMUSTERS UND
FAHRZEUGBELEUCHTUNGSVORRICHTUNG

PROCÉDÉ DE CORRECTION D'UN MOTIF LUMINEUX ET DISPOSITIF D'ÉCLAIRAGE
AUTOMOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.09.2020 Bulletin 2020/36**

(73) Proprietor: **Valeo Vision
93012 Bobigny Cedex (FR)**

(72) Inventors:
• **PRAT, Constantin
93012 BOBIGNY Cedex (FR)**
• **KANJ, Ali
93012 BOBIGNY Cedex (FR)**

(74) Representative: **Valeo Visibility
Service Propriété Industrielle
c/o Valeo Vision
34, rue Saint André
93012 Bobigny (FR)**

(56) References cited:
**EP-A1- 2 752 615        EP-A1- 3 412 962**
**WO-A1-2019/006481       DE-A1-102015 203 890**
**DE-A1-102016 222 749**

**Description**

TECHNICAL FIELD

This invention is related to the field of automotive lighting devices, and more particularly, to the way light patterns are managed.

STATE OF THE ART

Digital lighting devices are being increasingly adopted by car makers for middle and high market products. EP3412962A1 and DE102015203890A1 disclose examples for an automotive lighting device comprising a matrix arrangement of solid-state light sources configured to provide a light pattern. EP2752615A1, DE102016222749A1 and WO2019/006481A1 disclose examples for speed dependent correction of a light pattern.

Adaptive functions in lighting devices are usually focused on anti-glaring provisions. This is the main concern, since glaring is a very crucial point when providing a good quality high beam functionality. However, there are some other possibilities to improve the drivers' experience, by adapting the light pattern to the current conditions of the vehicle.

SUMMARY OF THE INVENTION

The invention provides an alternative solution for improving the driver's visual experience by a method for correcting a light pattern according to claim 1 and an automotive lighting device according to claim 10. Preferred embodiments of the invention are defined in dependent claims. Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first aspect the invention provides a method for correcting a first light pattern of light provided by a lighting device comprised in a vehicle travelling at a first speed, as defined in the independent method claim.

This method is aimed to correct the light pattern provided by a lighting device when the speed of the vehicle (and therefore, the speed of the lighting device) varies. Since the automotive lighting device is usually mounted on an automotive vehicle, the lighting device speed is the same as the vehicle speed, which is sensed easily. In this method, two directions are considered as reference directions: a central direction and a lateral direction. Both central and lateral directions are comprised in an intermediate horizontal zone (comprised between $-\beta \cdot h$ and $+\beta \cdot h$), but the central zone is comprised in the centre ($-\alpha \cdot w$ and $+\alpha \cdot w$) while the lateral direction is outer of this central zone (between $+\alpha \cdot w$ and $+0.5w$). The correction aims to increase the light intensity in the central zone and reduce the light intensity outside the central zone, to improve the visual experience of the driver when the speed increases.

In some particular embodiments, the luminous flux of the corrected light pattern is substantially the same as the luminous flux of the first light pattern.

By preserving a constant amount of luminous flux, the thermal and consumption levels are kept constant, which affects to design boundary conditions. If thermal and consumption levels varied depending on the vehicle speed, a more complex design would be required in the lighting device.

The light intensity is a light magnitude which measures the wavelength-weighted power emitted by a light source in a particular direction per unit solid angle, based on the luminosity function, a standardized model of the sensitivity of the human eye. The SI unit of luminous intensity is the candela (cd). The luminous flux is the measure of the perceived power of light is the light intensity. The SI unit of luminous flux is the lumen (lm). One lumen is defined as the luminous flux of light produced by a light source that emits one candela of light intensity over a solid angle of one steradian.

In some particular embodiments, $\alpha$ is comprised between 0.1 and 0.2. This value shows the size of the central zone affected by the correction, and may be chosen in the design stage.

According to the invention, the method further comprises the step of calculating a scale factor depending on the difference between the current speed of the lighting device and the first speed between steps a. and b., and wherein the step of generating the corrected light pattern comprises applying the scale factor to the first central light intensity to obtain the light intensity in the central direction of the corrected light pattern and applying the inverse of the scale factor to obtain the light intensity in the lateral direction of the corrected light pattern.

The scale factor allows an easy calculation and a correction which affects the whole light pattern, in order to adapt it to the vehicle speed.

In some particular embodiments, the scale factor is equal to 1 if the speed is lower or equal than a predetermined speed and is greater than 1 if the speed is higher than the predetermined speed.

There are cases where the low speed does not require a light pattern correction. In these cases, the factor is equal to 1 and the light pattern is not corrected. From a predetermined speed and higher, the light pattern may be corrected. In some particular embodiments, the scale factor for speeds which are higher than the predetermined speed is given by the expression

$$f = 1 + a \cdot (s - p)$$

Wherein *f* is the scale factor, *a* is a parameter comprised between 0.002 and 0.004 h/km, *s* is the speed of the lighting device and *p* is the predetermined speed, both in km/h.

This is an easy way of obtaining the scale factor, and the parameter a may be chosen by the car manufacturer or by the lighting device designer. In some particular embodiments, the predetermined speed is comprised between 50 km/h and 70km/h.

In some particular embodiments, the scale factor is applied to the first light pattern following a Gaussian curve, a Bezier curve, an exponential curve or a polynomic curve.

In some particular embodiments, the scale factor for speed which are higher than the predetermined speed is given by a Bezier curve, an exponential curve or a polynomic curve.

These are simple examples to achieve the goal of obtaining a curve which grows with speed.

In some particular examples, when the scale factor is applied to the first light pattern, the first light pattern has a bidimensional Gaussian distribution.

In some particular embodiments,

the first light pattern also has a first upper light intensity in an upper direction,
the upper direction is a direction comprised between $+\beta \cdot h$ and $+0.5 \cdot h$, both central and upper directions being comprised between $-\alpha \cdot w$ and $+\alpha \cdot w$;
the corrected light pattern comprises a corrected upper light intensity, the corrected upper light intensity being lower than the first upper light intensity when the current speed is greater than the first speed and is greater than the first upper light intensity when the current speed is lower than the first speed.

This causes a bi-dimensional correction of the light pattern, which may be advantageous in some environments.

In a second aspect, the invention provides an automotive lighting device comprising a matrix arrangement of solid-state light sources, configured to provide a light pattern; control means configured to accomplish the steps of the method according to any of the method claims.

This lighting device provides the advantageous functionality of adapting the shape and focus of the light pattern depending on the vehicle speed.

In some particular embodiments, the matrix arrangement comprises at least 2000 solid-state light sources.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

A matrix arrangement is a typical example for this method. The rows may be grouped in projecting distance ranges and each column of each group represent an angle interval. This angle value depends on the resolution of the matrix arrangement, which is typically comprised between 0.01º per column and 0.5º per column. As a consequence, the light intensity of each pixel may be adapted to create the corrected light pattern as a function of the vehicle speed.

**BRIEF LIST OF DRAWINGS AND REFERENCE NUMBERS**

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a general perspective view of an automotive lighting device according to the invention.
Figure 2 shows a photometric distribution of the first light pattern provided by the lighting device when the automotive vehicle travels at a first speed.
Figure 3 shows a Gaussian light intensity distribution when the vehicle is travelling at a first speed.
Figure 4 shows a particular example of a scale factor used in the method according to the invention.
Figure 5 shows different light intensity curves for different current vehicle speeds. The scale factor is applied in each speed but maintaining the global value of luminous flux.
Figures 6a and 6b show isolux curves for the first light pattern and for the corrected light pattern.
Figures 7a and 7b show a photometric distribution of two corrected light patterns.

**DETAILED DESCRIPTION OF THE INVENTION**

The example embodiments are described in sufficient detail to enable those of ordinary skill in the art to embody and implement the systems and processes herein described. It is important to understand that embodiments, as far as they fall within one of the scopes of the independent claims, can be provided in many alternate forms and should not be construed as limited to the examples set forth herein.

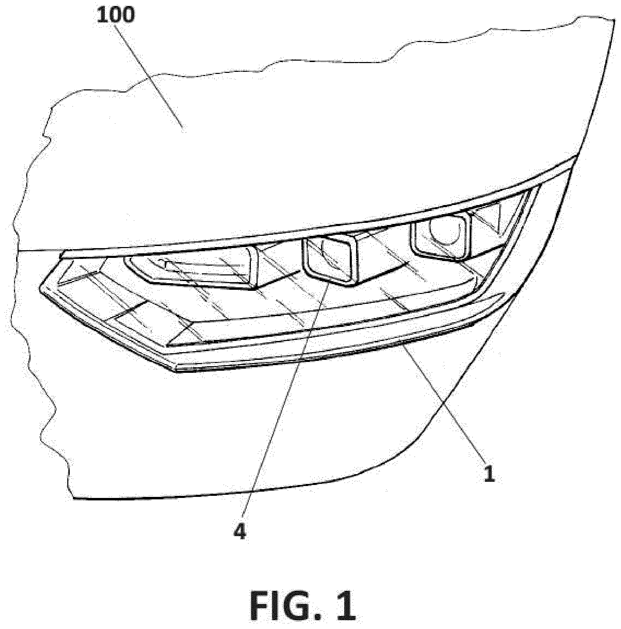

Figure 1 shows a general perspective view of an automotive lighting device according to the invention.

This lighting device 1 is installed in an automotive vehicle 100 and comprises

> a matrix arrangement of LEDs 4, intended to provide a light pattern;
> control means for controlling the intensity of each LED 4, to perform lighting functions and, particularly, to correct the light pattern depending on the vehicle speed.

This matrix configuration is a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixilated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

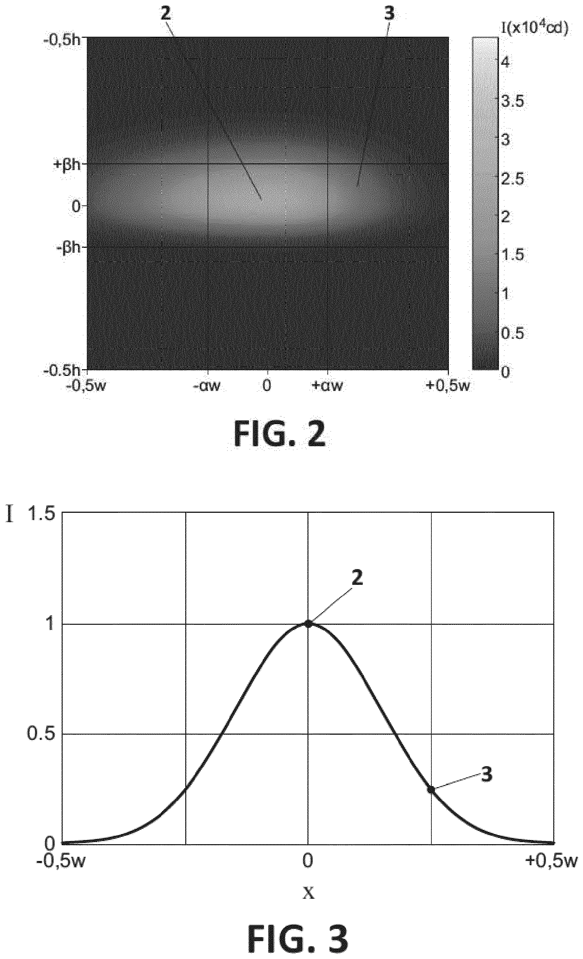

Figure 2 shows a photometric distribution of the first light pattern provided by the lighting device when the automotive vehicle travels at a first speed.

This first light pattern extends horizontally from -0.5w to +0.5w and vertically from -0.5h to +0.5h, w being the width of the first light pattern and h being the height of the first light pattern.

In this light pattern, two main directions are identified. Firstly, a central direction 2 and secondly, a lateral direction 3.

The central direction is representative of a direction where light intensity is high, and is comprised in the central zone of the light pattern, more particularly between -α·w and +α·w (horizontal coordinate) and between -β·h and +β·h (vertical coordinate), wherein α and β are parameters comprised between 0.1 and 0.2.

On the contrary, the lateral direction is representative of a direction outside this central zone, but still vertically centred, more particularly between +α·w and +0.5·w (horizontal coordinate) and between -β·h and +β·h (vertical coordinate).

These two directions are just representative of the light distribution along the light pattern. For example, a Gaussian light intensity distribution, such as the one shown in Figure 3, may be used as an example. This Gaussian light intensity distribution is represented choosing from figure 2 the vertical coordinate equal to 0. As a consequence, horizontal axis represents the horizontal direction, but vertical axis represents light intensity normalized to 1. In this case, the central direction 2 corresponds to a horizontal coordinate of 0 and the lateral direction 3 corresponds to a horizontal coordinate of +0.25w.

The method according to the invention comprising the steps of

a. measuring the current speed of the lighting device; and
b. generating a corrected light pattern, with a corrected central light intensity and a corrected lateral light intensity.

The corrected light pattern depends on the relation between the current speed and the first speed. If the current speed is higher than the first speed, the corrected light pattern will be more focused, increasing the light intensity in the central direction and decreasing the light intensity in the lateral direction. On the contrary, if the current speed is lower than the first speed, the corrected light pattern will decrease the light intensity in the central direction and will increase the light intensity in the lateral direction.

In fact, a scale factor will be applied to the curve shown in Figure 3, keeping a constant value of the total luminous flux of the light pattern.

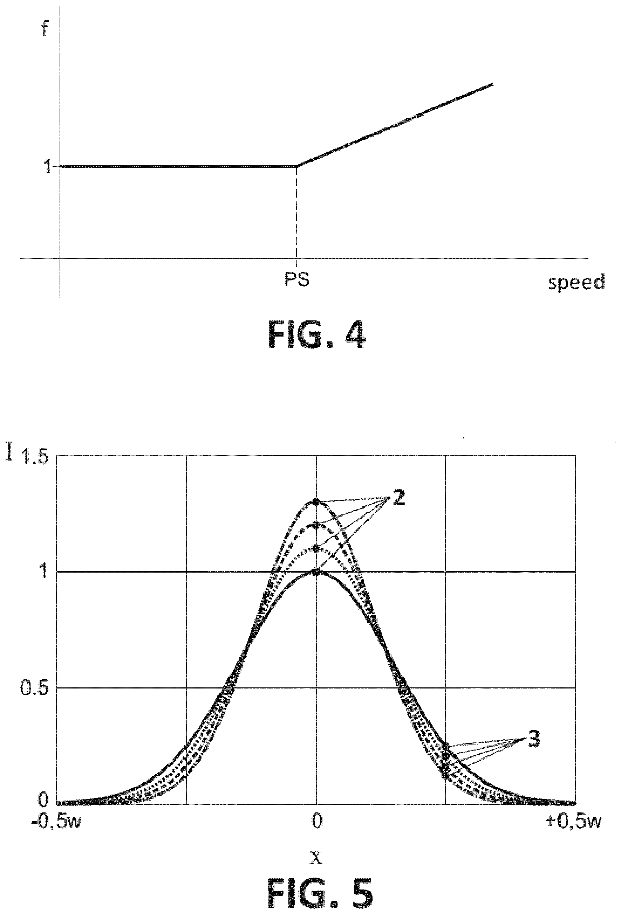

Figure 4 shows a particular example of a scale factor used in the method according to the invention.

In this case, there is a predetermined speed PS, which is fixed in 70 km/h. For a current speed up to this predetermined speed, there are no changes in the light pattern, since the driver's visual experience is not so much affected by the speed. But from this speed and higher, the scale factor follows the expression

$$f = 1 + a \cdot (s - p)$$

wherein

f is the scale factor,

a is a parameter comprised between 0.002 and 0.004 h/km,

s is the speed of the lighting device and p is the predetermined speed, both in km/h.

Once this scale factor has been calculated according to the current speed, this scale factor is applied to the Gaussian curve of figure 3. This Gaussian curve represents a distribution which depends on two variables, the amplitude and the variance. When the scale factor is applied to this Gaussian curve, the new amplitude is the old amplitude multiplied by the scale factor and the new variance is the old variance divided by the scale factor.

Figure 5 shows different light intensity curves for different current vehicle speeds. The scale factor is applied in each speed but maintaining the global value of luminous flux.

The continuous line represents the light pattern at the predetermined speed (for example, 70 km/h). The dotted line represents the light pattern at a second speed which is a little higher (for example, 90 km/h). The scale factor is approximately 1.06, so the light intensity in the central direction 2 is a little higher and the light intensity in the lateral direction 3 is a little lower. The dashed line represents the light pattern at a third speed which is a little higher than the second speed (for example, 110 km/h). The scale factor is approximately 1.12, so the light intensity in the central direction 2 is a little higher and the light intensity in the lateral direction 3 is a little lower. The dot-dashed line represents the light pattern at a fourth speed which is a little higher than the third speed (for example, 130 km/h). The scale factor is approximately 1.2, so the light intensity in the central direction 2 is the highest and the light intensity in the lateral direction 3 is the lowest.

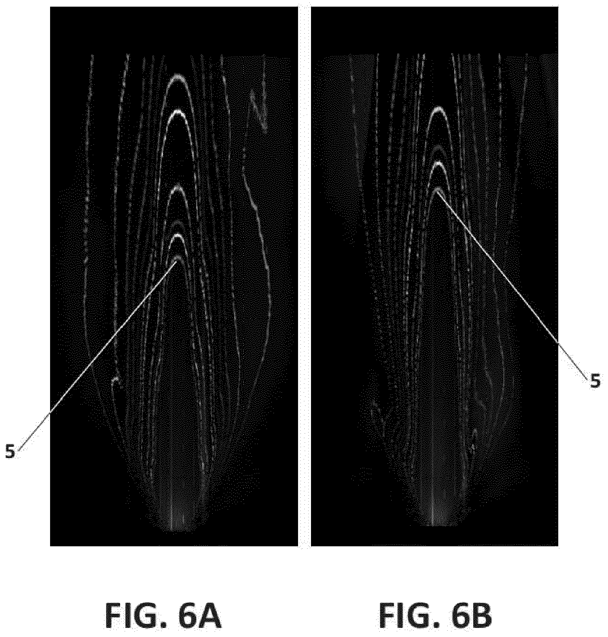

Figures 6a and 6b show isolux curves for the first light pattern and for the corrected light pattern. Figure 6a shows isolux curves for a first speed and figure 6b shows isolux curves for a current speed which is higher than the first speed. As a consequence, the isolux curve 5 corresponding to the highest value of light intensity is prolonged farther, since the light intensity in this zone is higher than in figure 6a.

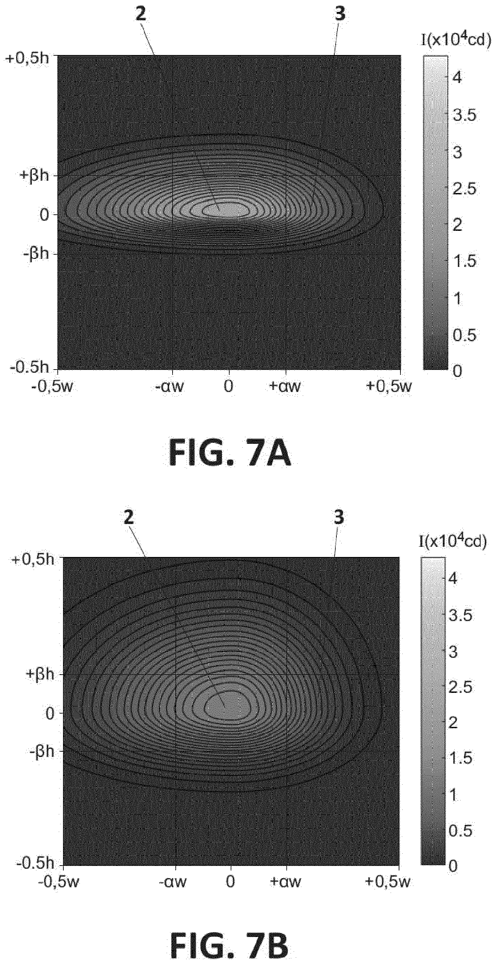

Finally, figures 7a and 7b show a photometric distribution of two corrected light patterns. Figure 7a shows a corrected light pattern according to the method explained above. Figure 7b shows a differently corrected light pattern.

In this case, correction has been carried out in the two dimensions, vertical and horizontal. The scale factor has been applied both to the light intensity profile for a constant vertical coordinate (as in the previous example) and to the light intensity profile for a constant horizontal profile, giving rise to a different light pattern, where an upper direction, located between -α·w and + α·w (horizontal coordinate) and between +β·h and +0.5·h (vertical coordinate) plays the same role as the lateral direction.

## Claims

1. Method for correcting a first light pattern of light provided by a lighting device (1) comprised in a vehicle travelling at a first speed, wherein the light is provided in a central direction (2) and in a lateral direction (3) and wherein a photometric distribution of the first light pattern has with reference to a plane located at a distance from the lighting device and intersected by the light:

   a first luminous flux extending horizontally from -0.5w to +0.5w on the plane and vertically from -0.5h to +0.5h on the plane, w being the width of the first light pattern at the distance and h being the height of the first light pattern at the distance; and
   a first central light intensity in a central zone on the plane intersected by the light in central direction (2) and a first lateral light intensity in a zone outside the central zone intersected by the light in lateral direction (3),
   wherein the central zone is horizontally comprised in the plane between -α·w and +α·w and the zone outside the central zone is horizontally comprised in the plane between +α·w and +0.5w, both zones being laterally comprised in the plane between -β·h and +β·h,

   α being a parameter comprised between 0.05 and 0.25 and
   β being a parameter comprised between 0.05 and 0.25;

   the method comprising the steps of

   a. measuring the current speed of the vehicle comprising the lighting device; and
   b. generating a corrected light pattern, with a corrected central light intensity and a corrected lateral light intensity;

   wherein the corrected central light intensity is greater than the first central light intensity when the current speed is greater than the first speed and lower than the first central light intensity when the current speed is lower than the first speed; and
   wherein the corrected lateral light intensity is lower than the first lateral light intensity when the current speed is greater than the first speed and greater than the first lateral light intensity when the current speed is lower than the first speed;
   **characterized in** calculating a scale factor (f) depending on the difference between the current speed and the first speed between steps a. and b., wherein the step of generating the corrected light pattern comprises applying the scale factor to the first central light intensity to obtain the light intensity in the central direction of the corrected light pattern and applying the inverse of the scale factor to obtain the light intensity in the lateral direction of the corrected light pattern.

2. Method according to claim 1, wherein the luminous flux of the corrected light pattern is substantially the same as the luminous flux of the first light pattern.

3. Method according to any of the preceding claims, α is comprised between 0.1 and 0.2.

4. Method according to claim 1, wherein the scale factor (f) is equal to 1 if the speed is lower or equal than a predetermined speed (PS) and is greater than 1 if the speed is higher than the predetermined speed (PS).

5. Method according to claim 4, wherein the scale factor (f) for speeds which are higher than the predetermined speed (PS) is given by the expression

$$f = 1 + a \cdot (s - p)$$

   wherein

   $f$ is the scale factor,
   $a$ is a parameter comprised between 0.002 and 0.004 h/km,
   $s$ is the speed of the lighting device and $p$ is the predetermined speed, both in km/h.

6. Method according to claim 4, wherein the scale factor (f) for speeds which are higher than the predetermined speed is given by a Bezier curve, an exponential curve or a polynomic curve.

7. Method according to any of claims 4 to 6, wherein the predetermined speed (SP) is comprised between 50 km/h and 70km/h.

8. Method according to any of claims 4 to 7, wherein the scale factor is applied to the first light pattern, the first light pattern having a bidimensional Gaussian distribution.

9. Method according to any of the preceding claims, wherein

   the first light pattern also has a first upper light intensity in an upper direction,
   the upper direction is a direction comprised between +β·h and +0.5·h on the plane, both central and upper directions being comprised between -α·w and +α•w on the plane; and wherein

the corrected light pattern comprises a corrected upper light intensity, the corrected upper light intensity being lower than the first upper light intensity when the current speed is greater than the first speed and is greater than the first upper light intensity when the current speed is lower than the first speed.

10. Automotive lighting device comprising

a matrix arrangement of solid-state light sources (4), configured to provide a light pattern (11, 12); and
control means configured to accomplish the steps of the method according to any of the preceding claims.

11. Automotive lighting device according to claim 10, wherein the matrix arrangement comprises at least 2000 solid-state light sources (4).

**Patentansprüche**

1. Verfahren zum Korrigieren eines ersten Lichtmusters von Licht, das durch eine Beleuchtungsvorrichtung (1) bereitgestellt wird, die in einem Fahrzeug, das sich mit einer ersten Geschwindigkeit fortbewegt, enthalten ist, wobei das Licht in einer zentralen Richtung (2) und in einer lateralen Richtung (3) bereitgestellt wird, und wobei eine photometrische Verteilung des ersten Lichtmusters mit Bezug auf eine Ebene, die sich unter einer Distanz von der Beleuchtungsvorrichtung befindet und von dem Licht geschnitten wird, Folgendes aufweist:

einen ersten Lichtstrom, der sich horizontal von - 0,5w bis +0,5w auf der Ebene und vertikal von -0,5h bis +0,5h auf der Ebene erstreckt, wobei w die Breite des ersten Lichtmusters bei einer Distanz ist und h die Höhe des ersten Lichtmusters bei einer Distanz ist; und
eine erste zentrale Lichtintensität in einer zentralen Zone auf der Ebene, durch das Licht in zentraler Richtung (2) geschnitten, und eine erste laterale Lichtintensität in einer Zone außerhalb der zentralen Zone, durch das Licht in lateraler Richtung (3) geschnitten,
wobei die zentrale Zone horizontal in der Ebene zwischen -α•w und +α•w enthalten ist und die Zone außerhalb der zentralen Zone horizontal in der Ebene zwischen +α•w und +0.5w enthalten ist, wobei beide Zonen lateral in der Ebene zwischen -β•h und +β•h enthalten sind,
a ein Parameter zwischen 0,05 und 0,25 ist, und β ein Parameter zwischen 0,05 und 0,25 ist;
wobei das Verfahren die Schritte umfasst von

a. Messen der aktuellen Geschwindigkeit des Fahrzeugs, das die Beleuchtungsvorrichtung umfasst; und
b. Erzeugen eines korrigierten Lichtmusters mit einer korrigierten zentralen Lichtintensität und einer korrigierten lateralen Lichtintensität;

wobei die korrigierte zentrale Lichtintensität größer als die erste zentrale Lichtintensität ist, wenn die aktuelle Geschwindigkeit größer als die erste Geschwindigkeit ist, und niedriger als die erste zentrale Lichtintensität ist, wenn die aktuelle Geschwindigkeit niedriger als die erste Geschwindigkeit ist; und
wobei die korrigierte laterale Lichtintensität niedriger als die erste laterale Lichtintensität ist, wenn die aktuelle Geschwindigkeit größer als die erste Geschwindigkeit ist, und größer als die erste laterale Lichtintensität ist, wenn die aktuelle Geschwindigkeit niedriger als die erste Geschwindigkeit ist;
**gekennzeichnet durch** Berechnen eines Skalierungsfaktors (f) in Abhängigkeit von der Differenz zwischen der aktuellen Geschwindigkeit und der ersten Geschwindigkeit zwischen Schritten a. und b., wobei der Schritt des Erzeugens des korrigierten Lichtmusters Anwenden des Skalierungsfaktors auf die erste zentrale Lichtintensität, um die Lichtintensität in der zentralen Richtung des korrigierten Lichtmusters zu erhalten, und Anwenden des Kehrwerts des Skalierungsfaktors, um die Lichtintensität in der lateralen Richtung des korrigierten Lichtmusters zu erhalten, umfasst.

2. Verfahren nach Anspruch 1, wobei der Lichtstrom des korrigierten Lichtmusters im Wesentlichen der gleiche wie der Lichtstrom des ersten Lichtmusters ist.

3. Verfahren nach einem der vorhergehenden Ansprüche, wobei a zwischen 0,1 und 0,2 liegt.

4. Verfahren nach Anspruch 1, wobei der Skalierungsfaktor (f) gleich 1 ist, wenn die Geschwindigkeit kleiner oder gleich einer vorbestimmten Geschwindigkeit (PS) ist, und größer als 1 ist, wenn die Geschwindigkeit höher als die vorbestimmte Geschwindigkeit (PS) ist.

5. Verfahren nach Anspruch 4, wobei der Skalierungsfaktor (f) für Geschwindigkeiten, die höher als die vorbestimmte Geschwindigkeit (PS) sind, durch den folgenden Ausdruck angegeben wird:

$$f = l + a \cdot (s - p)$$

wobei

> *f* der Skalierungsfaktor ist,
> *a* ein Parameter zwischen 0,002 und 0,004 h/km ist,
> *s* die Geschwindigkeit der Beleuchtungsvorrichtung und *p* die vorbestimmte Geschwindigkeit ist, beide in km/h.

6. Verfahren nach Anspruch 4, wobei der Skalierungsfaktor (f) für Geschwindigkeiten, die höher als die vorbestimmte Geschwindigkeit sind, durch eine Bezier-Kurve, eine Exponentialkurve oder eine Polynomkurve angegeben wird.

7. Verfahren nach einem der Ansprüche 4 bis 6, wobei die vorbestimmte Geschwindigkeit (SP) zwischen 50 km/h und 70 km/h liegt.

8. Verfahren nach einem der Ansprüche 4 bis 7, wobei der Skalierungsfaktor auf das erste Lichtmuster angewandt wird, wobei das erste Lichtmuster eine bidimensionale Gauß-Verteilung aufweist.

9. Verfahren nach einem der vorhergehenden Ansprüche, wobei

> das erste Lichtmuster auch eine erste obere Lichtintensität in einer oberen Richtung aufweist,
> wobei die obere Richtung eine Richtung ist, die zwischen +β•h und +0,5•h auf der Ebene liegt, wobei sowohl die zentrale als auch die obere Richtung zwischen -α•w und + α•w auf der Ebene liegen;
> und wobei das korrigierte Lichtmuster eine korrigierte obere Lichtintensität umfasst, wobei die korrigierte obere Lichtintensität niedriger als die erste obere Lichtintensität ist, wenn die aktuelle Geschwindigkeit größer als die erste Geschwindigkeit ist, und größer als die erste obere Lichtintensität ist, wenn die aktuelle Geschwindigkeit niedriger als die erste Geschwindigkeit ist.

10. Automobil-Beleuchtungsvorrichtung, umfassend

> eine Matrixanordnung von Festkörperlichtquellen (4), ausgelegt zum Liefern eines Lichtmusters (11, 12); und
> Steuerungsmittel, ausgelegt zum Vornehmen der Schritte des Verfahrens nach einem der vorhergehenden Ansprüche.

11. Automobil-Beleuchtungsvorrichtung nach Anspruch 10, wobei die Matrixanordnung mindestens 2000 Festkörperlichtquellen (4) umfasst.

**Revendications**

1. Procédé de correction d'un premier profil de lumière de la lumière fournie par un dispositif d'éclairage (1) compris dans un véhicule se déplaçant à une première vitesse, la lumière étant fournie dans une direction centrale (2) et dans une direction latérale (3), et une distribution photométrique de la première configuration lumineuse ayant, en référence à un plan situé à une certaine distance du dispositif d'éclairage et traversé par la lumière :

> un premier flux lumineux s'étendant horizontalement de - 0,5w à +0,5w sur le plan et verticalement de -0,5h à +0,5h sur le plan, w étant la largeur du premier profil de lumière à la distance et h étant la hauteur du premier profil de lumière à la distance ; et
> une première intensité lumineuse centrale dans une zone centrale du plan traversé par la lumière dans la direction centrale (2) et une première intensité lumineuse latérale dans une zone en dehors de la zone centrale traversée par la lumière dans la direction latérale (3),
> la zone centrale étant comprise horizontalement dans le plan entre -α.w et +α.w et la zone en dehors de la zone centrale étant comprise horizontalement dans le plan entre +α.w et +0,5w, les deux zones étant comprises latéralement dans le plan entre -β.h et +β.h,
> α étant un paramètre compris entre 0,05 et 0,25 et
> β étant un paramètre compris entre 0,05 et 0,25 ;
> le procédé comprenant les étapes suivantes :

>> a. mesurer la vitesse courante du véhicule équipé du dispositif d'éclairage ; et
>> b. générer un profil de lumière corrigé, avec une intensité lumineuse centrale corrigée et une intensité lumineuse latérale corrigée ;

> l'intensité lumineuse centrale corrigée étant supérieure à la première intensité lumineuse centrale lorsque la vitesse courante est supérieure à la première vitesse et inférieure à la première intensité lumineuse centrale lorsque la vitesse courante est inférieure à la première vitesse ; et
> l'intensité lumineuse latérale corrigée étant inférieure à la première intensité lumineuse latérale lorsque la vitesse courante est supérieure à la première vitesse et supérieure à la première intensité lumineuse latérale lorsque la vitesse courante est inférieure à la première vitesse ;
> **caractérisé par** le calcul d'un facteur d'échelle (f) en fonction de la différence entre la vitesse courante et la première vitesse entre les étapes a. et b., l'étape de génération du profil de lumière corrigé comprenant d'appliquer le facteur d'échelle à la première intensité lumineuse centrale pour obtenir l'intensité lumineuse dans la direction centrale du profil de lumière corrigé et d'appliquer l'inverse du facteur d'échelle pour obtenir l'intensité lumineuse dans la direction latérale du profil de lumière corrigé.

2. Procédé selon la revendication 1, dans lequel le flux lumineux du profil de lumière corrigé est sensiblement le même que le flux lumineux du premier profil de lumière.

3. Procédé selon l'une quelconque des revendications précédentes, dans lequel $\alpha$ est compris entre 0,1 et 0,2.

4. Procédé selon la revendication 1, dans lequel le facteur d'échelle (f) est égal à 1 si la vitesse est inférieure ou égale à une vitesse prédéterminée (PS) et est supérieur à 1 si la vitesse est supérieure à la vitesse prédéterminée (PS).

5. Procédé selon la revendication 4, dans lequel le facteur d'échelle (f) pour les vitesses qui sont supérieures à la vitesse prédéterminée (PS) est donné par l'expression :

$$f = 1 + a.(s - p)$$

dans laquelle :

    f est le facteur d'échelle,
    $\alpha$ est un paramètre compris entre 0,002 et 0,004 h/km,
    s est la vitesse du dispositif d'éclairage et p est la vitesse prédéterminée, toutes deux exprimées en km/h.

6. Procédé selon la revendication 4, dans lequel le facteur d'échelle (f) pour les vitesses qui sont supérieures à la vitesse prédéterminée est donné par une courbe de Bézier, une courbe exponentielle ou une courbe polynomique.

7. Procédé selon l'une quelconque des revendications 4 à 6, dans lequel la vitesse prédéterminée (SP) est comprise entre 50 km/h et 70 km/h.

8. Procédé selon l'une quelconque des revendications 4 à 7, dans lequel le facteur d'échelle est appliqué au premier profil de lumière, le premier profil de lumière ayant une distribution gaussienne bidimensionnelle.

9. Procédé selon l'une quelconque des revendications précédentes, dans lequel :

le premier profil de lumière présente également une première intensité lumineuse supérieure dans une direction supérieure, la direction supérieure étant une direction comprise entre +$\beta$.h et +0,5.h sur le plan, les directions centrale et supérieure étant toutes deux comprises entre -$\alpha$.w et +$\alpha$·w sur le plan ;
et dans lequel
le profil de lumière corrigé comprend une intensité lumineuse supérieure corrigée, l'intensité lumineuse supérieure corrigée étant inférieure à la première intensité lumineuse supérieure lorsque la vitesse courante est supérieure à la première vitesse et supérieure à la première intensité lumineuse supérieure lorsque la vitesse courante est inférieure à la première vitesse.

10. Dispositif d'éclairage automobile comprenant :

un agencement matriciel de sources lumineuses à semiconducteur (4), configuré pour fournir un profil de lumière (11, 12) ; et
un moyen de commande configuré pour accomplir les étapes du procédé selon l'une quelconque des revendications précédentes.

11. Dispositif d'éclairage automobile selon la revendication 10, dans lequel l'agencement matriciel comprend au moins 2000 sources lumineuses à semiconducteur (4).

FIG. 1

FIG. 2

FIG. 3

**FIG. 4**

**FIG. 5**

FIG. 6A          FIG. 6B

FIG. 7A

FIG. 7B

**EP 3 702 663 B1**

**REFERENCES CITED IN THE DESCRIPTION**

**Patent documents cited in the description**

- EP 3412962 A1
- DE 102015203890 A1
- EP 2752615 A1
- DE 102016222749 A1
- WO 2019006481 A1